# EUROPEAN PATENT APPLICATION

(11) **EP 1 950 005 A1**
(43) Date of publication of application: **30.07.2008**
(21) Application number: 08150619.8
(22) Date of filing: 24.01.2008
(51) Int. Cl.: B23Q 11/00, B23Q 17/00, B24B 41/04

(54) **Machine tool with balance adjustment device and control method therefor**

(30) Priority: 26.01.2007 JP 2007016627
(71) Applicant: JTEKT CORPORATION, Chuo-ku Osaka-shi Osaka 542-8502 (JP)
(72) Inventor: Sugiyama, Kazuhisa, Osaka-shi, Osaka 542-8502 (JP); Furuhata, Tetsuro, Osaka-shi, Osaka 542-8502 (JP)
(74) Representative: TBK-Patent

(57) **Abstract**

A machine tool includes a wheel rotation spindle supported rotatably for holding a tool for processing a work by rotation; a tool changing unit for exchanging a tool provided at a predetermined position for the tool held on the side of the wheel rotation spindle; a rotation balance adjustment device for adjusting the balance due to the rotation of the wheel rotation spindle; a tool information memory section for storing the tool information including the balance data of the tool held on the side of the wheel rotation spindle; and a control section for actuating the rotation balance adjustment device on the basis of the tool information of the tool held on the wheel rotation spindle stored in the tool information memory section thereby to impleznent the control of the rotation balance adjustment.

## Description

The present application is based on Japanese patent application No. 2007-016627 filed on January **26**, **2007**, the entire contents of which are incorporated herein by reference.

### BACKGROUND OF THE INVENTION

### 1. FIELD OF THE INVENTION

The invention relates to a machine tool for changing a plurality of tools to process work, and the control method therefor, and particularly to a machine tool capable of automatic tool changing and which can make the balance adjustment of a spindle after changing the tools, and the control method therefor.

### 2. DESCRIPTION OF THE RELATED ART

In machine tools, there are lathes, drilling machines, boring machines, milling machines, jointing machines, broaching machines, grinding machines and the like in response to the contents of machining, and further there are machine tools which can not only accomplish a single machining, but also a variety of combined machining according to numerical control (NC). Moreover, for example, machining centers or grinding centers having a plurality of tools, and a variety of so-called multitasking machines which make possible to apply a plurality of machining processes such as lathe turning, and grinding are variously proposed. This type of processing machines having a plurality of tools apply a variety of machining steps to work while changing tools by means of an automatic tool changer (ATC).

As a machine tool for processing work while changing a plurality of tools, there is a NC processing machine which makes automatic tool changing based on a program set previously, and a series of processing operations is conducted while proceeding the balance adjustment in case of changing the tools (see JP-A-H02-131867).

According to the NC processing machine of JP-A-H02-131867**,** it is described that the imbalance in the spindle due to changing tools is detected by means of acceleration pickup, then, water is injected into balance discs attached to the respective tools from spray nozzles based on the value detected to correct the imbalance, and as a consequence, the processing operation can be achieved at high precision due to the correction of the imbalance.

However, according to the NC processing machine of JP-A-H02-131867, since the balance adjustment of the spindle is required in case of changing tools by means of an automatic tool changing device in each time, so that a considerable time is required for the balance adjustment, and consequently, there is a limit for reducing the work processing time.

### SUMMARY OF THE INVENTION

Accordingly, an object of the invention is to provide a machine tool for processing work by changing a plurality of tools, and the control method therefor, by which the tools may be changed by means of an automatic tool changing device, and the balance adjustment required for changing the tools can be achieved for a short period of time.
(**1**) According to one embodiment of the invention, a machine tool may comprise a wheel rotation spindle supported rotatably for holding a tool to process a work by rotation; a tool changing unit for exchanging a tool provided at a predetermined position for the tool held on the side of the wheel rotation spindle; a rotation balance adjustment device for adjusting the balance due to the rotation of the wheel rotation spindle; a tool information memory section for storing the tool information including the balance data of the tool held on the side of the wheel rotation spindle; and a control section for actuating the rotation balance adjustment device on the basis of the tool information of the tool held on the wheel rotation spindle stored in the tool information memory section thereby to implement the control of the rotation balance adjustment.
(**2**) According to another embodiment of the invention, a control method of machine tools may comprise a tool changing step for exchanging a tool provided at a predetermined position for the tool held on the side of a wheel rotation spindle which is supported rotatably so as to process a work by the rotation; a tool information reading step for reading out tool information from a tool information memory section which stores the tool information including the balance data of the tool held on the side of the wheel rotation spindle; and a control step for controlling a rotation balance adjustment device which adjusts the balance produced by the rotation of the wheel rotation spindle based on the tool information read out thereby to adjust the rotation balance.

### BRIEF DESCRIPTION OF THE DRAWINGS

The invention will be explained in more detail in conjunction with appended drawings, wherein:
**FIG 1** is a plan view showing a multitasking machine according to an exemplary embodiment of the invention;
**FIG. 2** is a front view of the multitasking machine shown in **FIG. 1** viewed from the front side (the bottom side of **FIG. 1**);
**FIG. 3** is a perspective view, partially in cross section, showing a rotation balance adjustment device;

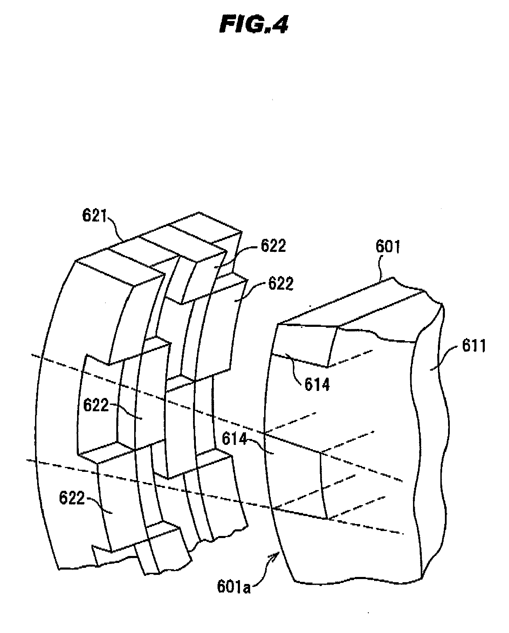

**FIG. 4** is a partial perspective view showing a part of a polar plate ring **621** in detail;
**FIG. 5** is a detailed view showing the respective parts of an automatic tool changing unit **400** and a wheel rotation spindle unit **200** viewed from the front thereof;
**FIG. 6** is a block diagram showing the whole system configuration for implementing the balance adjustment after an automatic tool changing operation; and
**FIG. 7** is a flowchart showing the procedures for the balance adjustment.

### DESCRIPTION OF THE PREFERRED EMBODIMENTS

### The exemplary embodiments of the invention

As a machine tool having a plurality of tools and changing the plurality of tools to process work, a multitasking machine which can perform a plurality of working operations such as lathe turning, and grinding will be described hereunder. It is, however, to be noted that the invention is not only applicable to a multitasking machine, but also a unitasking machine, a NC processing machine and the like machines.

### Constitution of multitasking machine

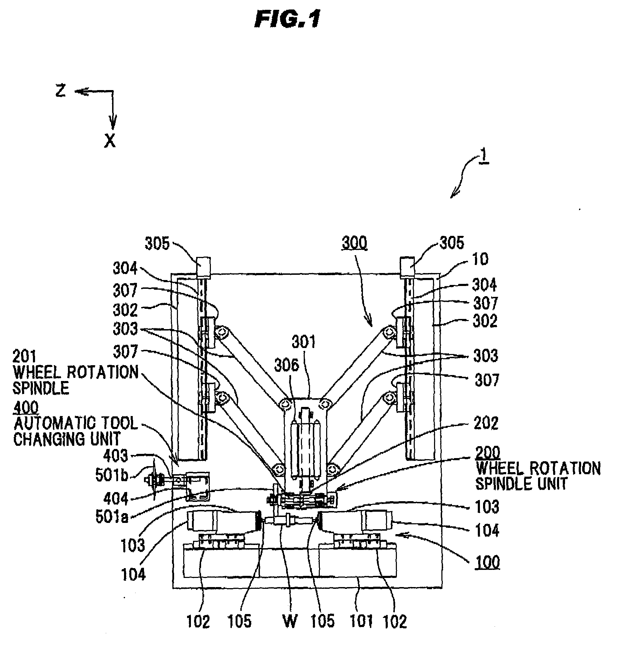

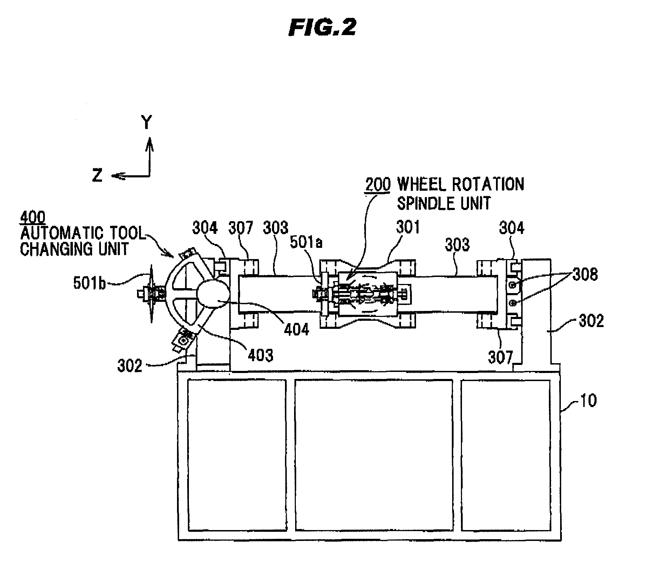

**FIG 1** is a plan view showing a multitasking machine according to an exemplary embodiment of the invention, and **FIG. 2** is a front view of the multitasking machine shown in **FIG. 1** viewed from the front side (the bottom side of **FIG.1**).

The whole driving of the multitasking machine **1** is controlled by means of a computer numerical controlled apparatus (CNC) (not shown). The multitasking machine **1** is composed of a multitasking machine main body and auxiliary equipment (not shown). The major auxiliary equipment involves a laser oscillator, an oil feeding device, a cooling system, air supplying equipment, a coolant feeding device, a cutting chips collector, duct equipment for connecting these auxiliary equipment to the multitasking machine main body, and the like devices.

The multitasking machine **1** has a work support driving unit **100** rested on a bed **10** and for supporting rotatively drivable a work W, a wheel rotation spindle unit **200** to which process tools are detachably attached, a link head **301** loading the wheel rotation spindle unit **200** and being locatable with respect to the work W by means of a multi-degrees of freedom link mechanism **300** mounted on the bed **10**, and an automatic tool changing unit **400** for attaching and detaching the process tools to predetermined positions of the wheel rotation spindle unit **200**.

The work support driving unit **100** has right and left headstocks **103** being slidably transferred through right and left headstock slide guides **102** on a headstock base **101** rested on the bed **10**, and spindle driving motors **104** for driving rotatively spindles **105** at a predetermined number of revolutions are provided on the respective right and left headstocks **103**. The respective right and left headstocks **103** are constituted in such that they may be independently slid in Z direction to clamp the work W between predetermined center cores, whereby the position of the work W can be fixed.

The wheel rotation spindle unit **200** is constituted in such that the rotary driving force of a wheel rotation spindle driving motor **306** mounted on the link head **301** is transmitted to a wheel rotation spindle **201** on which a first process tool **501**a is loaded by means of a traction drive unit **202**, whereby the first process tool **501**a is rotatively driven at a predetermined number of revolutions. It is to be noted that although the above-described traction drive unit **202** is preferable also for grinding operations, because vibrations are slight and rotatively transmittable by means of rolling elements, it may be constituted by means of the other transmission manners such as a rotatively driving method by a gear or a belt, and a direct coupling method with respect to the wheel rotation spindle driving motor **306**.

The wheel rotation spindle unit **200** is preferably constituted to involve a stationary means such as a brake for maintaining the stopped state of the wheel rotation spindle **201**, and the wheel rotation spindle driving motor **306** which can set up the stationary torque of the wheel rotation spindle **201** at a high value, or a control means having high rotation stop servo rigidity for holding the wheel rotation spindle **201** in a stopped state. Furthermore, as in the case of a thermal treatment tool and the like, such a constitution having a tool loading section for fixing the first process tool **501**a to the wheel rotation spindle unit **200** may be applied in the case that a tool which does not process a work in a rotating state is used.

The wheel rotation spindle **201** has a clamp section **203** which clamps the first process tool **501**a to firmly fasten it with the wheel rotation spindle **201.** Specifically, the clamp section 203 is constituted in accordance with BT, HSK specifications and the like of a clamp unit used in a multitasking machine and the like.

In the vicinities of the clamp section **203**, a displacement sensor **682** for detecting the displacement (deflection) in the radial direction accompanied with the rotation of the first process tool **501**a loaded on the wheel rotation spindle **201** is securely provided on the side of the multitasking machine **1**. The displacement sensor **682** may be, for example, a sensor which can detect the displacement in the radial direction in a noncontact state. Namely, displacement sensors of capacitance type, Doppler optical displacement sensor and the like may be used. The displacement sensor **682** is used for the balance adjustment in case of changing tools.

The wheel rotation spindle **201** is provided with a rotary sensor **250**, and it is constituted in such that the rotation angle of the wheel rotation spindle **201** can be detected in the absolute value. The rotary sensor **250** may be, for example, an absolute type sensor which uses a noncontact optical rotary encoder. In addition, a resolver and the like may also be used. The rotary sensor **250** is used for rotation angle matching in case of changing tools, and the detection of the starting point of a rotation angle in case of balance adjustment.

The multi-degrees of freedom link mechanism **300** is a so-called parallel mechanism wherein closed link mechanisms are disposed parallely and composed of four feed mechanisms in total on the right and left sides provided on a pair of right and left linear guide bases **302** rested on the bed **10**, and four links **303** for connecting the link head **301** loading the wheel rotation spindle unit **200** with the feed mechanisms. The feed mechanism is constituted by a pair of right and left linear guides **304,** two sliders **307** guided transferably in the X-axis direction with respect to the respective linear guides **304,** and ball screws **308** and link drive servomotors **305** for transferring independently the respective sliders **307**. One end of the link **303** is jointly supported to sliders **307** of the feed mechanisms in a revolvable manner, respectively, and the other end of the link **303** is jointly supported at a predetermined position of the link head **301** in a revolvable manner. According to the constitution as described above, when the respective link driving motors **305** are controlled to independently control the positions of the respective sliders, the link head **301** can effect three-degrees of freedom of the transfer in the X-axial direction, the transfer in the Z-axial direction, and the rotation around the Y-axis. As the feed mechanism constituting the multi-degrees of freedom link mechanism **300**, such a constitution that the respective sliders are driven by a linear motor in place of the ball screws **308** and the link driving servomotors **305** may be applied.

Concerning the position in the X-axial direction, the position in the Z-axial direction, and the rotation angle around the Y-axis of the link head **301**, the respective positions of the four links **303** are detected by position sensors (optical linear scales, magnetic scales or the like) (not shown) attached to the linear guides **304**, respectively, and the positions and postures of the link head **301** are controlled based on the resulting detection.

The automatic tool changing unit **400** is composed of a tool turret **403** rested on the bed **10** at a predetermined position thereof and having a plurality of tool pods **402** which can hold a variety of second process tools **501b**, and a servomotor **404** for effecting dividing control around the X-axis. A coupling section **406** with ball bushes **405** is formed inside the tool pod **402** in such that a grooved portion **407** defined on the extreme end of the second process tool **501**b comes to be detachable by a predetermined or more force. As to the number of the tool pod **402**, a large number of them may be set by increasing the diameter of the tool turret **403**.

Examples of the first process tool **501**a and the second process tool **501**b include lathe turning tools such as an electroplated wheel for lathe turning used for lathe turning operations; cutting tools such as a drill, and an endmill used for drilling, slot-drilling and the like; heat-treating tools such as a laser quench-hardening head; grinding tools such as a grind wheel (e.g. a CBN wheel) used for grinding operations; and surface-finishing tools used for superfinishing operations, ELID grinding operations and the like.

In the above-described process tools, a variety of tools such as lathe turning tools, cutting tools, grinding tools, surface-finishing tools and the like which processes a work W by the rotation of a tool is balance-adjusted by means of the undermentioned balance adjustment device after changing tools.

### Rotation balance adjustment device

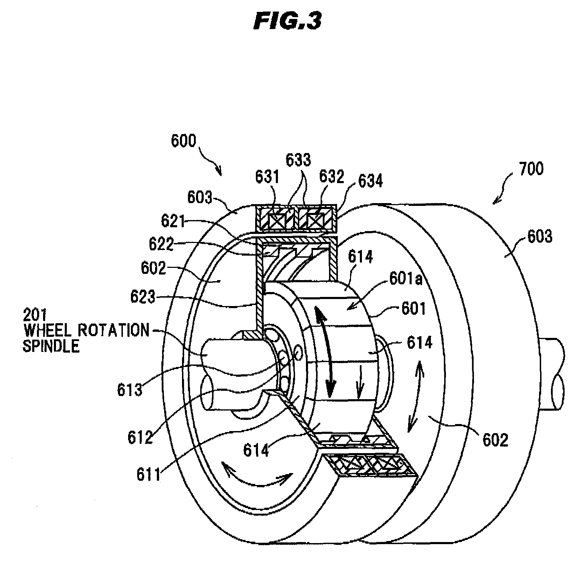

**FIG. 3** is a perspective view, partially in cross section, showing a rotation balance adjustment device. Since the rotation balance adjustment device is composed of a first unit **600** and a second unit **700** being rotation balance correction units having the identical constitutions to each other, the following explanation will be made in respect of the first unit **600.** It is to be noted that components 7**0**1 to **734** (not shown) constituting the second unit **700** correspond to components **601** to **634** of the first unit **600**.

The rotation balance adjustment device is supported rotatably with respect to the wheel rotation spindle **201** thereby to be synchronously rotatable with each other, has the center of gravity decentered from the wheel rotation spindle **201**, and further involves a balance rotor **601** on the outer circumferential surface of which a plurality of magnetic poles are formed alternately with a predetermined pitch along the circumferential direction thereof. Moreover, the balance rotor **601** has a polar plate ring **621** made of a soft magnetic material and having a plurality of salient poles **622** projected towards the centripetal direction in such a situation that the outer circumferential surface **601** of the balance rotor **601** is opposed to the inner circumferential surface of the salient poles **622**. Furthermore, the balance rotor **601** involves a stator **603** provided fixedly so as to be close to the polar plate ring **621,** whereby a suitable change of magnetic polarity is applied to the salient poles **622** of the polar plate ring **321** to rotate the balance rotor **601** with respect to the wheel rotation spindle **201**.

Moreover, the balance rotor **601** involves a plurality of permanent magnets **614** embedded in the outer circumferential part thereof wherein the same poles of the permanent magnets **614** are directed to the centrifugal direction of the balance rotor **601** with the above-described pitch. In addition, the polar plate ring **621** has the salient poles **622** of first and second columns formed alternately in the circumferential direction thereof with the same pitch as that of the magnetic poles of the balance rotor **601** as well as the salient poles **622** of similar third and fourth columns formed in deviance in the circumferential direction thereof by a quarter pitch from the salient poles **622** of the first and second columns. Besides, the respective stators **603** have a ring-shaped first exciting coil **631** giving mutually a reverse magnetic polarity to the first and second column salient poles **622**, and a ring-shaped second exciting coil **632** giving mutually a reverse magnetic polarity to the third and fourth column salient poles **622.**

The first unit **600** is composed of the balance rotor **601,** the polar plate rotor **602,** and the stator **603**; and these components **601**, **602**, and **603** are provided coaxially on the wheel rotation spindle **201**. In this case, the balance rotor **601** has a substantially rotationally symmetrical contour, and it can be rotated synchronous with the wheel rotation spindle **201**. Moreover, the polar plate rotor **602** has a substantially rotationally symmetrical contour, and it is rotated synchronously with the wheel rotation spindle **201**. On the other hand, although the stator **603** has a rotationally symmetrical contour, it is not rotated synchronously with the wheel rotation spindle **201**, but it is provided fixedly on the side of the wheel rotation spindle unit **200** in close to the outer circumferential surface of the polar plate rotor **602**.

The balance rotor **601** is composed of a main body **611** made of a soft magnetic metal material and having a substantially hollow cylindrical contour, a bearing **613** provided in the center of the main body **611** and journals rotatably the main body **611** with respect to the rotating shaft, a balance weight **612** embedded unevenly in one side of the main body **611,** and the plurality of the permanent magnets **614** embedded in the outer circumference of the main body **611.** Namely, the balance rotor **601** is supported rotatably with respect to the wheel rotation spindle **201** through the bearing **613** being a ball bearing; and the balance rotor **601** rotates usually in synchronous with the wheel rotation spindle **201** (in the case that the situation is not in the adjustment of rotation balance). Furthermore, throughholes are formed on the main body **611** in a concentrated fashion on one side thereof along the circumferential direction; and the balance weights **612** made of lead are inserted into the throughholes. Consequently, the balance rotor **601** has the center of gravity deviated from the wheel rotation spindle **201**, so that the balance rotor **601** has a predetermined magnitude of mass primary moment (static imbalance).

Moreover, recessed grooves are formed on the outer circumference of the balance rotor **601**, the fitting grooves being opened to the outer circumferential surface and disposed with a predetermined pitch in the circumferential direction; and the plurality of the permanent magnets **614** are embedded in these fitting grooves in such that the same poles (N poles) are directed to the centrifugal direction. Namely, the outer circumferential surface of the balance rotor **601** is composed of the outer circumferential surface of the permanent magnets **614** embedded with a predetermined clearance in the circumferential direction thereof, and the outer circumference of the main body of soft magnetism filling in the clearance between the respective permanent magnets **614**. Since the outer circumferential surface of the permanent magnet **614** is N pole, S pole is formed on the outer circumferential surface of the main body **611** leading up to the magnetic pole on the opposite side of the permanent magnet **614**. As a consequence, a plurality of magnetic poles having alternate polarities is formed on the outer circumferential surface of the balance rotor **1**. with a predetermined pitch in the circumferential direction thereof

The polar plate rotor **602** is composed of the polar plate ring **621** made of a soft magnetic metal material, and a casing **623** made of a non-magnetic stainless steel and which fixes the polar plate ring **621** with respect to the wheel rotation spindle **201.** The casing **623** defines an inner space of a hollow cylindrical configuration between the casing and the wheel rotation spindle **201**, the balance rotor **601** is contained in the inner space, and the polar plate ring **621** is fixed to the inside of the inner circumferential surface of the casing **623**. On the other hand, the polar plate ring **621** is fixed to the wheel rotation spindle **201** through the casing **623**, whereby the polar plate ring **621** is rotated together with the wheel rotation spindle **201**. The polar plate ring **621** has the plurality of the salient poles **622** made of a soft magnetic material protruded in the centripetal direction in the case that the inner circumferential surface of the polar plate ring **621** is opposed to the outer circumferential surface **601a** of the balance rotor **601**. Namely, the inner circumferential surface of the polar plate ring **621** is opposed to the outer circumferential surface **601**a of the balance rotor **601** with an extremely slight clearance.

**FIG**. **4** is a partial perspective view showing a part of a polar plate ring **621** in detail. The polar plate ring **621** has the first and second column salient poles **622** formed alternately in the circumferential direction with the same pitch as that of the above-described pitch of the magnetic poles in the balance rotor **601,** and the similar third and fourth column salient poles **622** are deviated from these first and second salient poles by a quarter pitch in the circumferential direction thereof, respectively. Namely, the first salient pole column (the first column of the salient poles **622**) through the fourth salient pole column (the fourth column of the salient poles **622**) are a ring-shaped member made of a soft magnetic material, and on the inner circumferential surface, a number of the salient poles **622** are formed with a predetermined clearance in the circumferential direction thereof. The width of the salient pole **622** in the circumferential direction is the same as that of an area wherein no salient pole **622** exists (link section) in the circumferential direction. The pitch angle of the salient pole **622** in the circumferential direction viewed from the center of axle of the wheel rotation spindle **201** is equal to that of the permanent magnet **614** of the balance rotor **601**. Moreover, the thickness in the radial direction of the link section linking the adjacent salient poles **622** to each other in the circumferential direction thereof is very thin, so that the short circuit in the magnetic circuit through the link section is suppressed to the minimum.

Substantially ring-shaped members having the respective salient poles are superposed coaxially in the axial length direction to be fixedly welded to each other on the circumferential surface, whereby the integral polar plate ring **621** is formed. The first salient pole column is joined to the second salient pole column in such that they are deviated from one another by a half pitch in the circumferential direction thereof. Likewise, the third salient pole column is joined to the fourth salient pole column in such that they are deviated from one another by a half pitch in the circumferential direction thereof. Furthermore, the first salient pole column is joined to the third salient pole column in such that they are deviated from one another by a quarter pitch in the circumferential direction as well as the second salient pole column is joined to the fourth salient pole column in such that they are deviated from one another by a quarter pitch in the circumferential direction thereof, respectively.

The stator **603** is a ring-shaped functional member disposed fixedly in such that the inner circumferential surface of which is opposed closely to the outer circumferential surface of the polar plate rotor **602**; and the clearance between the inner circumferential surface of the stator **603** and the outer circumferential surface of the polar plate rotor **602** is slight. The stator **603** is composed of a pair of the first exciting coil **631** and the second exciting coil **632**, two coil holders **633** made of a resin for retaining both the coils, respectively, and a coil casing **634** made of a non-magnetic stainless steel for containing both the coil holders with an adequate clearance along the axial length direction. A thin inner circumferential plate of the coil casing **634** separates the inner circumferential surfaces of both the coils **631** and **632** from the outer circumferential surface of the polar plate rotor **602**, whereby both the coils **631** and **632** are protected so as not to be broken, even if the inner circumferential surfaces of both the coils are slidingly in contact with the outer circumferential surface of the polar plate rotor.

The first exciting coil **631** is the ring-shaped exciting coil **631** for providing reverse magnetic polarities to the salient poles **622** in the first salient pole column and the salient poles **622** in the second salient pole column to each other, while the second exciting coil **632** is the ring-shaped exciting coil for providing reverse magnetic polarities to the salient poles **622** in the third salient pole column and the salient poles **622** in the fourth salient pole column to each other. Namely, when an electric current is allowed to flow through the first exciting coil **631** and the second exciting coil **632** in the same direction, magnetic polarities appear in the respective salient poles **622** from the first salient pole column to the fourth salient pole column in the order of S, N, S, and N. As a consequence, the stator **603** exhibits a function for providing adequate changes of magnetic polarity to the salient poles **622** in the polar plate ring **621** to revolve the balance rotor **601** with a quarter pitch with respect to the wheel rotation spindle **201** in spite of the fact that the stator **603** is fixedly provided in close to the polar plate ring **621** .

The position of the first exciting coil **631** in the axial length direction is located in between the first salient pole column and the second salient pole column, while the position of the second exciting coil **632** in the axial length direction is located in between the third salient pole column and the fourth salient pole column. As a result, the first exciting coil **631** can provide the reverse magnetic polarities principally to the first salient pole column and the second salient pole column to each other, while the second exciting coil **632** can provide the reverse magnetic polarities principally to the third salient pole column and the fourth salient pole column to each other.

### Automatic tool changing

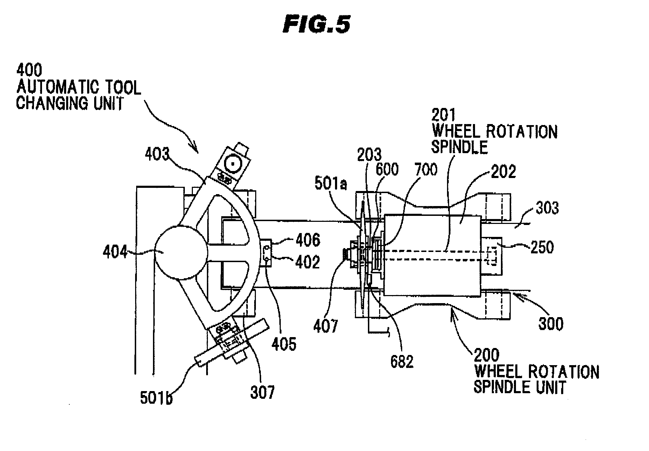

**FIG. 5** is a detailed view showing the respective parts of an automatic tool changing unit **400** and a wheel rotation spindle unit **200** viewed from the front thereof.

In the following, a series of operations wherein the first process tool **501**a which is in such a condition that it is loaded on the wheel rotation spindle unit **200** is tool-changed into the second process tool **501**b will be described.

The wheel rotation spindle **200** is driven up to a predetermined position with respect to the automatic tool changing unit **400** rested on the bed **10** at a predetermined position by means of the multi-degrees of freedom link mechanism **300,** whereby the attaching and detaching operations of the first process tool **501**a come to be possible. The predetermined position is determined by the grooved portion **407** defined in the extreme end portion of the first process tool **501**a and a coupling section **406** with ball bushes **405** formed inside the tool pod **402.** In the case that the above-described predetermined position differs dependent on the types of the first process tool **501**a, a predetermined position specified by a type of the first process tool **501**a is input as the processing data, so that the data is reflected in the automatic tool changing process according to NC control.

As to the first process tool **501**a loaded on the wheel rotation spindle unit **200**, the first process tool **501**a is recovered into the tool turret **403** as a step for transferring to the following working process. First, the wheel rotation spindle unit **200** is driven up to the predetermined position by means of the multi-degrees of freedom link mechanism **300**. Then, the grooved portion **407** defined in the extreme end of the first process tool **501**a is inserted into the coupling section **406** with a predetermined or more force. The grooved portion **407** is held with the ball bushes **405** in a predetermined force. The first process tool **501**a fastened to the wheel rotation spindle **201** by means of the clamp section **203** of the wheel rotation spindle unit **200** is clamp-released. After completing these operations, the wheel rotation spindle unit **200** is apart from the automatic tool changing unit **400** by means of the multi-degrees of freedom link mechanism **300**, whereby the recovery operation is finished.

In the condition wherein the wheel rotation spindle unit **200** is apart from the automatic tool changing unit **400**, a dividing operation is conducted by the tool turret **403** to which the second process tool **501b** is set up. A part of the tool pod **402** to which the second process tool **501**b to be used in the following step is set up is rotatively operated by the servomotor **404** so as to be located at a predetermined position, so that the dividing operation by means of the tool turret **403** is completed.

With respect to the second process tool **501b** in a condition which may be attached, the wheel rotation spindle unit **200** approaches, and it is fastened to the wheel rotation spindle **201** by means of the clamp section **203** of the wheel rotation spindle unit **200**.

After completing the attaching operation of the above-described process tool, the wheel rotation spindle unit **200** is apart from the automatic tool changing unit **400** by the multi-degrees of freedom link mechanism **300,** and the second process tool **501**b is set up at the initialization position in the following step. In case of changing a tool, the wheel rotation spindle **201** is stopped always at a fixed position (rotation phase position). Moreover, a key (not shown) which is a basis of the rotation phase is established, and rotation is prevented in a tool magazine or during the transfer of a tool by means of the tool changing unit **400**, so that the rotation phase is not changed. Accordingly, the process tool and the wheel rotation spindle **201** are attached always with the identical rotation phase to each other.

### The whole system configuration of balance adjustment after automatic tool changing

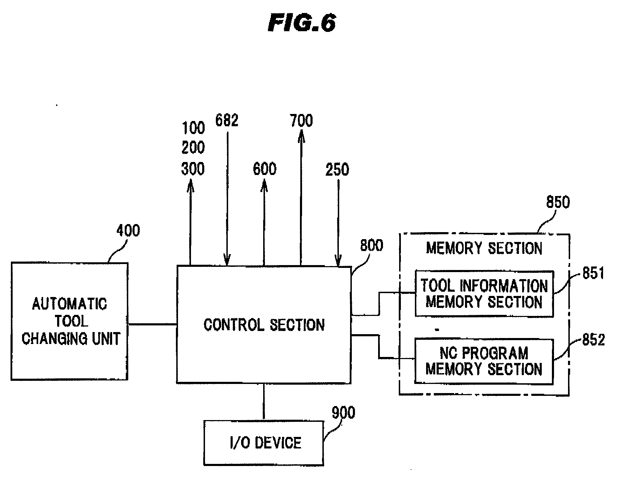

**FIG. 6** is a block diagram showing the whole system configuration for implementing the balance adjustment after an automatic tool changing operation.

The whole system is composed of a control section **800**, the automatic tool changing unit **400**, a displacement sensor **682**, the rotary sensor **250**, the first sensor **600**, the second sensor **700**, a memory section **850**, and an I/O device **900**.

The control section **800** is composed of a CPU for conducting a variety of data processing, an interface for input and output with respect to the outside, and a RAM and the like functioning as a processing area. Furthermore, the I/O device **900** is a device for inputting or outputting a NC working program, tool information and the like to the memory section **850** through the control section **800**,

The memory section **850** consists of a tool information memory section **851** and a NC program memory section **852**. In the tool information memory section **851**, the tool information as to a variety of the tools loaded on the tool turret **403** of the automatic tool changing unit **400** is stored. As the tool information, the tool pod number corresponding to each tool pod **402** of the tool turret **403**, the number of times in changing tools, types of tools, balance data (an angle θ to be normally rotated with respect to the wheel rotation spindle **201**) and the like information are stored. The tool pod number, the types of tools, and the balance data are retained in the condition wherein they are stored at the time of initial setting. However, when truing or dressing is performed, the balance data which are newly measured is renewed to be stored.

### Balance adjustment after automatic tool changing

The work support driving unit **100,** the wheel rotation spindle unit **200,** the multi-degrees of freedom link mechanism **300** and the like are operated and driven by means of the control section **800** as previously determined in accordance with the control program stored in the NC program memory section **852**. When the command for changing a tool is issued, the second process tool **501**b is attached to the wheel rotation spindle **201** as described above. The rotation of the wheel rotation spindle **201** is stopped by the rotation sensor **250** at a predetermined default position in the rotation direction. As a consequence, a predetermined phase is retained always with respect to the rotation direction before and after changing tools in the attachment of the second process tool **501**b to the wheel rotation spindle **201**. It is to be noted that the second process tool **501**b loaded on the wheel rotation spindle **201** will be hereinafter referred simply to as "tool".

A specific balance adjustment is carried out as follows. First, tool information is read out from the tool information memory section **851** for storing the tool information including the balance data of the machine tool retained in the side of the wheel rotation spindle **201** (tool information read out step). Although a balance adjustment is conducted in accordance with the following control steps **1** to **20** after the tool information readout step, procedures for the balance adjustment differ in the case that the balance data of the machine tool loaded on the wheel rotation spindle **201** is already stored in the tool information memory section **851** from the case that the balance data is not stored therein.

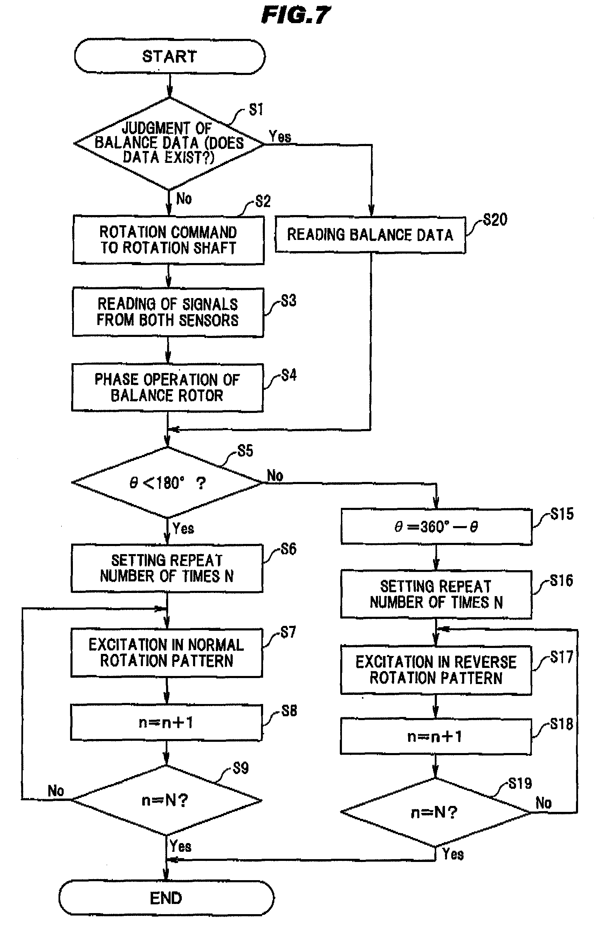

**FIG. 7** is a flowchart of control steps (**1** to **20**) showing the procedures for the balance adjustment. In the following, both of the balance adjustment in the case that the balance data is stored already in the tool information memory section **851** and the case in that the balance data is not yet stored therein will be described, respectively.

In a balance data judgment step S**1**, it is judged, as described above, whether or not balance data is already stored in the tool information memory section **851,** i.e. whether or not the tool information memory section **851** has the balance data; and balance adjustment control is implemented by the control section **800** in accordance with the following processing flow, respectively.

### The balance adjustment in the case that no balance data is stored in the tool information memory section 851

In a processing step S**2**, the wheel rotation spindle **201** turns to the starting point position at which an output signal is detected from the rotary sensor **250** before the wheel rotation spindle **201** is rotatively driven; and the balance rotors **601** and **701** of both the units **600** and **700** balance in such that parts wherein the centers of gravity are located eccentrically are directed downwards to maintain the condition. Then, the initial positions are set up in such that both the balance rotors **601** and **701** are turned by **90**° from the balanced condition towards the reverse directions with each other, whereby the synthesis of the static imbalance produced by both the balance rotors **601** and **701** is made to be zero.

Thereafter, a rotation command is issued to the wheel rotation spindle **201** in the processing step S**2**, and it is confirmed that the wheel rotation spindle **201** reaches a predetermined number of revolutions to be in a stable condition. In this case, since the static imbalance produced by both the balance rotors **601** and **701** is zero as mentioned above, the static imbalance around the wheel rotation spindle **201** becomes easy to measure. Moreover, since it is clear that both the balance rotors **601** and **701** are in the aforementioned initial position, an operation how much both the balance rotors **601** and **701** are respectively to be turned thereafter becomes easy in order to take the static balance thereof.

Then, in a processing step S**3**, the output signals from the rotary sensor **250** and the displacement sensor **682** are input to the control section **800** through an A/D converter (not shown). The displacement signal from the displacement sensor **682** is subjected to differential processing, if necessary, to obtain acceleration signals, they are filtered by means of a bandpass filter which passes only the signals in the frequency band responding to the rotation period of the wheel rotation spindle **201**, and consequently, only the vibrational components caused by the static imbalance produced in synchronous with the rotation period of the wheel rotation spindle **201** are extracted. Thus, the magnitude of the static imbalance and the phase angle with respect to the wheel rotation spindle **201** come to be clear.

In the following processing step S**4**, an operation how much degrees both the balance rotors **601** and **701** are to be turned respectively with respect to the wheel rotation spindle **201** is made in order to take the static balance thereof. The operation is a geometric operation for calculating phase angles to be taken by the respective balance rotors **601** and **701** in such that such static imbalance for cancelling the static imbalance which becomes clear in the above-described step is produced by the synthesis of the mass primary moments of both the balance rotors **601** and **701**. As a result, an angle θ (**0**° ≦ θ < **360**°) to be normally rotated as to the wheel rotation spindle **201** is calculated with respect to the balance rotors **601** and **701**, respectively. The data of the angle θ is stored in the tool information memory section **851** as the balance data.

In the judgment step S**5**, it is judged whether or not θ is less than **180**°. In the case that θ is less than **180**°, the control logic proceeds to the normal rotation sequence of steps S**6** to S**9**. On the contrary, when the θ is **180**° or higher, the control logic proceeds to the reverse rotation sequence of steps S**15** to S**19.** Namely, when the θ is less than **180**°, the repeat number N for switching the exciting conditions of both the exciting coils **631** and **632** required for the normal rotation by an angle θ as a result of rotating them in every quarter pitch is calculated, and the resulting value is set up in the following processing step S**6**. Thereafter, the positive/negative switching of an exciting current is made with respect to both the exciting coils **631** and **632** as well as **731** and **732** in the normal rotation pattern ofN times in the loop of steps S**7** to S**9**, whereby the balance rotors **601** and **701** are turned by θ in the normal direction with respect to the wheel rotation spindle **201**, and they are finished up at a predetermined phase angle.

On the contrary, when the θ is **180**° or higher, the control logic proceeds to a bypass processing step S**15**, so that an angle θ for rotating reversely the balance rotors **601** and **701** is set up with respect to the wheel rotation spindle **201**. Then, the repeat number N for switching the exciting conditions of both the exciting coils **631** and **632** as well as **731** and **732** required for the reverse rotation by an angle θ as a result of rotating them in every quarter pitch is calculated, and the resulting value is set up in the following processing step **S16**. Thereafter, the positive/negative switching of an exciting current is made with respect to both the exciting coils **631** and **632** as well as **731** and **732** in the reverse rotation pattern of N times in the loop of steps S**17** to S**19**, whereby the balance rotors **601** and **701** are turned by θ in the reverse direction with respect to the wheel rotation spindle **201**, and they are finished up at a predetermined phase angle.

In accordance with the manners as described above, when the balance rotors **601** and **701** are turned up to the adequate phase angles, respectively, the static imbalance applied to the wheel rotation spindle **201** is cancelled by both the balance rotors **601** and **701**, so that the static balance is automatically established.

### The balance adjustment in the case that a balance data is stored already in the tool information memory section 851

In a step S**20**, the data of an angle θ stored as balance data is read into the control section **800** from the tool information memory section **851**, and based on which, the balance adjustment is similarly made in the steps of on and after the step S**5**.

### Other exemplary embodiments

In the above-described exemplary embodiments, although the data of an angle θ is operated on the basis of the signals from the rotation sensor **250** and the displacement sensor **682** provided on the multitasking machine **1** in the processing steps S**2** to S**4**, the data of the angle θ may be operated by a tool balancer provided outside the multitasking machine **1**. In this case, no displacement sensor **682** is required on the side of the multitasking machine **1**. Moreover, the rotation sensor **250** is used for matching the angle of rotation in case of changing machine tools.

In the exemplary embodiment of the invention as described above, although the balance adjustment is conducted by means of two balance rotors, the invention is not limited thereto, but such a constitution by which the balance adjustment around the wheel rotation spindle **201** can be achieved is applicable. For instance, they may be a means for attaining the balance adjustment by means of the positions of balance weights and the phase adjustment thereof.

### Effects of the exemplary embodiments of the invention

According to the exemplary embodiments of the invention, the following advantageous effects are obtained.
(**1**) When a machine tool is changed for the first time, the data of an angle θ is operated on the basis of the signals from the displacement sensor **682**, the balance adjustment is conducted based on the operated result. In this balance adjustment, control operations are continued until the signals from the displacement sensor **682** reach to a predetermined displacement amount or accelerated velocity, or less so that the balance adjustment requires a considerable time. In the exemplary embodiment of the invention, the control of the balance adjustment which requires the considerable time as described above becomes unnecessary in the case that the balance data is already stored in the tool information memory section **851**. Accordingly, it is not required to adjust the balance in every changing operation of machine tools unlike a conventional balance adjustment. As a consequence, the invention has such an advantageous effect that the period of time accompanied with changing machine tools can be reduced.
(**2**) In the multitasking machine and the like as shown in the exemplary embodiment of the invention, the number of times for changing machine tools is usually frequent so that the ratio of the time required for changing machine tools is high in the total working time of a work. Accordingly, when the invention is applied to such multitasking machine as described above and the like, there is such an advantage that the working time of a work can be remarkably reduced
(**3**) The balance data as tool information is inherent to a certain machine tool.
Accordingly, when the balance data stored in the tool information memory section **851** in the case that the machine tool is changed for the first time is used, the precision of the balance adjustment is highly maintained, whereby there are such advantageous effects that the vibration added to the wheel rotation spindle **201** is reduced to improve the machining accuracy of a machine tool, and further, the life of the tool is also prolonged.

The presently disclosed embodiments are therefore considered in all respects to be illustrative and not restrictive. The scope of the invention is indicated by the appended claims rather than the foregoing description, and all changes that come within the meaning and range of equivalents thereof are intended to be embraced therein.

A machine tool includes a wheel rotation spindle supported rotatably for holding a tool for processing a work by rotation; a tool changing unit for exchanging a tool provided at a predetermined position for the tool held on the side of the wheel rotation spindle; a rotation balance adjustment device for adjusting the balance due to the rotation of the wheel rotation spindle; a tool information memory section for storing the tool information including the balance data of the tool held on the side of the wheel rotation spindle; and a control section for actuating the rotation balance adjustment device on the basis of the tool information of the tool held on the wheel rotation spindle stored in the tool information memory section thereby to implement the control of the rotation balance adjustment.

## Claims

1. A machine tool, comprising:
a wheel rotation spindle supported rotatably for holding a tool to process a work by rotation;
a tool changing unit for exchanging a tool provided at a predetermined position for the tool held on the wheel rotation spindle;
a rotation balance adjustment device for adjusting the balance due to the rotation of the wheel rotation spindle;
a tool information memory section for storing the tool information including the balance data of the tool held on the side of the wheel rotation spindle; and
a control section for actuating the rotation balance adjustment device on the basis of the tool information of the tool held on the wheel rotation spindle stored in the tool information memory section thereby to implement the control of the rotation balance adjustment.

2. The machine tool according to claim **1**, wherein:
the tool information memory section has a balance data judgment section for judging whether or not there is the balance data of the tool information as to the tool held on the wheel rotation spindle.

3. The machine tool according to claim **2**, wherein:
the control section implements such different control operations that the rotation balance adjustment device is operated on the basis of the balance data stored in the case that the balance data of the tool held on the wheel rotation spindle is already stored in the tool information memory section as a result of changing the tool by means of the tool changing unit, and that the rotation balance adjustment device is operated on the basis of the balance data of the tool measured newly in the case that no balance data of the tool held on the wheel rotation spindle is stored in the tool information memory section.

4. The machine tool according to claim **1**, wherein:
a displacement sensor for detecting the displacement in the radial direction produced by the rotation of the tool loaded on the wheel rotation spindle is provided in the vicinities of a clamp section of the wheel rotation spindle.

5. The machine tool according to claim **1**, wherein:
a rotation sensor for detecting the rotation angle of the wheel rotation spindle as an absolute value is provided on the wheel rotation spindle.

6. The machine tool according to claim **1**, wherein:
the tool changing unit has a tool turret on which a plurality of tool pods capable of retaining a variety of tools is provided.

7. The machine tool according to claim **1**, wherein:
the information as to the variety of tools (tool pod number, number of times in changing tools, types of tools, and balance data) loaded on the tool turret of the automatic tool changing unit is stored in the tool information memory section.

8. The machine tool according to claim **1**, wherein:
the rotation balance adjustment device is composed of two rotation balance correction units having the same constitution as that of the other rotation balance correction unit.

9. The machine tool according to claim **8**, wherein:
each of the rotation balance correction units is composed of a balance rotor, a polar plate rotor, and a stator which are coaxially provided on the wheel rotation spindle wherein the balance rotor and the polar plate rotor have a substantially rotationally symmetrical contour and they may be synchronously rotated with the wheel rotation spindle, and the stator is in close to the outer circumferential surface of the polar plate rotor and fixedly disposed on the side of the wheel rotation spindle unit.

10. The machine tool according to claim **9**, wherein:
the respective balance rotors of the respective rotation balance correction units are disposed in such that positions at which both the balance rotors are turned by **90**° in the reverse directions with each other from such a state that parts of the balance rotors wherein the centers of gravity existing eccentrically direct downwards are as the initial position.

11. A control method of machine tools, comprising:
a tool changing step for exchanging a tool provided at a predetermined position for the tool held on a wheel rotation spindle which is supported rotatably so as to process a work by the rotation;
a tool information reading step for reading out tool information from a tool information memory section which stores the tool information including the balance data of the tool held on the wheel rotation spindle; and
a control step for controlling a rotation balance adjustment device which adjusts the balance produced by the rotation of the wheel rotation spindle based on the tool information read out thereby to adjust the rotation balance.

12. The control method according to claim **11**, wherein:
the control step includes a balance data judgment step for judging whether or not there is a balance data of the tool information of the tool held on the wheel rotation spindle.

13. The control method according to claim **12**, wherein:
the control step is a step for implementing such different control operations that the rotation balance adjustment device is operated on the basis of the balance data stored in the case that the balance data of the tool held on the wheel rotation spindle is already stored in the tool information memory section as a result of changing the tool by means of the tool changing unit, and that the rotation balance adjustment device is operated on the basis of the balance data of the tool measured newly in the case that no balance data of the tool held on the wheel rotation spindle is stored in the tool information memory section.

14. The control method according to claim **11**, wherein:
the tool changing step is a step for stopping always the wheel rotation spindle at a fixed position (rotation phase position), and attaching always the tool to the wheel rotation spindle with an identical rotation phase.

15. The control method according to claim **11**, wherein:
the tool information reading step is a step for reading out the information as to the tools (tool pod number, number of times in changing tools, types of tools, and balance data) from the tool information memory section.

16. The control method according to claim **15**, wherein:
the tools are grinding wheels; and
the tool information reading step is a step for reading out the balance data which are newly measured and renewed to be stored in the case that truing or dressing is performed.

17. The control method according to claim **11**, wherein:
the control step is a step for controlling the rotation balance adjustment device in which the respective balance rotors of the respective rotation balance correction units are disposed in such that positions at which both the balance rotors are turned by **90**° in the reverse directions with each other from such a state that parts of the balance rotors wherein the centers of gravity existing eccentrically direct downwards are as the initial position, so that the synthesis of the static imbalance produced by both the balance rotors is made to be zero.

18. The control method according to claim **17,** wherein:
the control step is a step for operating how many degrees both the balance rotors are to be turned respectively from the initial position with respect to the wheel rotation spindle to obtain an angle θ to be turned with respect to the wheel rotation spindle.

19. The control method according to claim **18**, wherein:
the control step is a step for storing the angle θ operated in the tool information memory section as the balance data.

20. The control method according to claim **18**, wherein:
the control step is a step for rotating both the balance rotors on the basis of the angle θ operated in the normal or reverse direction with respect to the wheel rotation spindle in the case that the tool information memory section stores no balance data of the tool held on the side of the wheel rotation spindle as a result of changing the tool by means of the tool changing unit, whereby the static imbalance applied to the wheel rotation spindle is cancelled by both the balance rotors, so that the static balance is automatically established.
